# EUROPEAN PATENT SPECIFICATION

(11) **EP 1 258 335 B1**
(45) Date of publication and mention of the grant of the patent: **26.10.2005**
(21) Application number: 01203378.3
(22) Date of filing: 07.09.2001
(51) Int. Cl.: B29C 47/82, B29C 47/66, B29C 47/92

(54) **Extruder for temperature controlled extrusion**
Extrudiervorrichtung für temperaturkontrollierte Extrusion
Extrudeuse pour l'extrusion à température régulée

(30) Priority: 15.05.2001 WO PCT/IT01/00234
(43) Date of publication of application: 20.11.2002
(73) Proprietor: Italcoppie S.r.l., 26030 Malagnino (CR) (IT)
(72) Inventor: Cogo, Mauro, 21010 S. Macario, Varese (IT)
(74) Representative: Siniscalco, Fabio

(56) References cited:
- GB-A- 2 107 639
- US-A- 4 480 981
- US-A- 5 324 108

## Description

The present invention relates to an extruder for temperature-controlled extrusion.

There are known extruders for temperature-controlled extrusion, particularly for the extrusion of polymers.

In an extrusion line for plastic material, pellets of plastic or other material are usually fed into the inner bore of an extrusion chamber through a feed aperture. A variable-pitch screw conveys the pellets from the feed end of the extruder towards its opposite end, where an extrusion die shapes the extruded or melted material into sheets, tubes, bars or any other shape suitable for profile forming. Typically, the said extrusion chamber has from three to six temperature zones, which are distributed between the feed aperture and the extrusion die. During their movement within the extrusion chamber, the plastic pellets are melted both by a heating system and as a result of the friction between the screw and the plastic pellets and between the plastic pellets and the internal surface of the extrusion chamber. The pitch of the screw thread varies along the bore of the extruder in accordance with its specific function in each particular portion, for example the conveying of the pellets during their melting, the mixing of the melted material and the forcing of the melted material through the extrusion die. Additionally, different temperatures are maintained in the aforesaid temperature zones, again in accordance with the specific function of each particular portion during the extrusion process. The individual temperature zones are usually heated by means of electrical resistors located on the outer surface of the extrusion chamber. In addition to the heat generated by these electrical resistors, a considerable quantity of frictional heat between the screw and the plastic material causes a further heating of the said plastic material. At high production rates, the said frictional heat can be sufficient to melt the solid plastic material and to raise its temperature even above the temperature required in each particular portion of the extrusion chamber. In this case, the extruder has to be cooled externally in order to maintain the desired temperature for the extrusion process.

The actual temperature of the material to be extruded, and consequently the temperature inside the bore of the extruder, depends on various factors, such as the characteristics of the material to be extruded, the coefficients of friction between the screw, the cylinder and the raw material, the geometry of the screw, the set-point of the electrical resistors and the temperature and climatic conditions outside the extrusion chamber. Naturally, the aforementioned factors show wide fluctuations and vary with time because of their statistical nature and also because of physical and chemical phenomena of the extrusion process itself. This makes it necessary to provide thermal control in the individual temperature zones along the extrusion chamber. The said thermal control typically comprises the following functional units: the measurement of temperature, monitoring and control, and the heating and cooling of the corresponding temperature zone from the outside.

The most important temperature is that of the raw material within the bore of the extruder. However, a direct measurement of the temperature inside the said bore is impossible because of the movement of the screw and of the raw material, which would shear off a thermal probe projecting too far into the bore. There would also be losses of raw material and deposits within the measurement cavity, which would adversely affect the whole extrusion process.

To provide the closest possible approach to the bore of the extruder, radial holes are made in the extrusion chamber to house corresponding thermal probes. The said holes do not open into the bore of the extruder, but approach it as closely as permitted by the machining process and the mechanical strength required in the extrusion chamber. Since the aforesaid measurement holes or cavities are radial, the heat sensors housed in them are also orientated in a radial direction with respect to the longitudinal axis of the bore of the extruder; see Figure 4. An example of such an extruder is described in US 4,480,981, and US 5 324 108, respectively.

However, extruders for temperature-controlled extrusion described with reference to the prior art have certain disadvantages relating to the precision of temperature measurement, response time and thermal stability during the operation of the extruder.

The quality of measurement of the thermal probes is primarily dependent on three factors, namely the smallest possible distance between the sensitive element of the thermal probe and the bore of the extruder, the greatest possible protection of the thermal probe from any external effects, and the smallest possible weakening of the extrusion chamber by the measurement cavity. Where the distance between the sensitive element of the thermal probe and the bore of the extruder is concerned, it should be noted that the sensitive elements of the most commonly used sensors do not necessarily coincide with their extremities or tips, but may be located at some distance from these. For example, this distance can be more than three diameters of the sensor in the case of thermistors. The resulting reading is therefore taken at a considerable distance from the centre of the extrusion process.

To provide shielding from external effects, such as temperature fluctuations due to draughts or to the temporary removal of the heat insulation layer for the maintenance of a defective heater during the extrusion process, it is desirable for the thermal probe to penetrate into the casing or shell of the extrusion chamber to a depth equal to at least ten diameters of the probe. Sinking to this depth is difficult to achieve, if not completely impossible, with the measurement chambers according to the prior art, particularly where the diameter of the extrusion chamber is small and therefore the extrusion cylinder is thin-walled. The temperature reading of the sensor in question is therefore highly sensitive to anything occurring outside the extruder.

With respect to the mechanical strength of the extrusion chamber, it is considered that the prismatic casing of the extruder is not significantly weakened when small-diameter thermal probes, and consequently small-bore measurement cavities, are present, even if the measurement cavity approaches the bore of the extruder very closely. However, heat sensors which provide the desired measurement precision over a sufficiently wide temperature range for extrusion have larger diameters, and therefore require wider measurement cavities. It is therefore frequently impossible to bring the measurement cavity closer to the bore of the extruder than is permitted by a minimum thickness, without adversely affecting the structural integrity of the extrusion chamber.

A further disadvantage of the known measurement cavities arises from the fact that the said cavities are orientated exactly in the direction of the maximum temperature gradient. Any error in the positioning of the thermal probe within the measurement cavity leads to a measurement error which is amplified according to the actual thermal gradient, thus generating serious errors of interpretation and in the control of the extrusion process.

The object of the present invention is therefore to propose an extruder for temperature-controlled extrusion which enables the aforesaid drawbacks to be overcome.

This object is achieved by means of an extruder for temperature-controlled extrusion according to claim 1, comprising an extrusion chamber which forms a cylindrical bore with a feed aperture and a discharge aperture, the said cylindrical bore being developed about an axis of symmetry and interacting with means of conveying and processing the material to be extruded, in which the said extrusion chamber has at least one measurement cavity for housing at least one heat sensor, characterized in that the said measurement cavity extends in a direction contained in a plane tangent to a cylinder having the said axis of symmetry and a diameter greater than the diameter of the said cylindrical bore.

To enable the invention to be understood more clearly, a description is given below, by way of example and without restrictive intent, of an embodiment of the invention, illustrated in the attached drawings, in which
Figure 1 represents a side view of an extrusion chamber according to the invention;
Figure 2 shows a view from above of the extrusion chamber of Figure 1;
Figure 3 shows an enlarged section through the extrusion chamber of Figure 1 according to the line III-III;

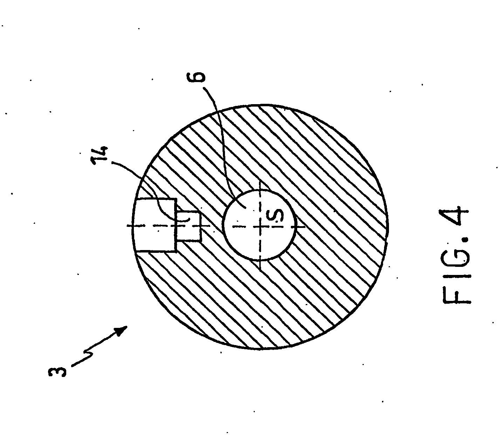

Figure 4 shows a cross section through an extrusion chamber according to the known art;
Figure 5 is a schematic representation of an embodiment of an extrusion machine according to the invention;
Figure 6 shows a side view of an extrusion chamber according to a further embodiment;
Figure 7 shows a view from above of the extrusion chamber of Figure 6;
Figure 8 shows an enlarged section through the extrusion chamber of Figure 6 according to the line VIII-VIII.

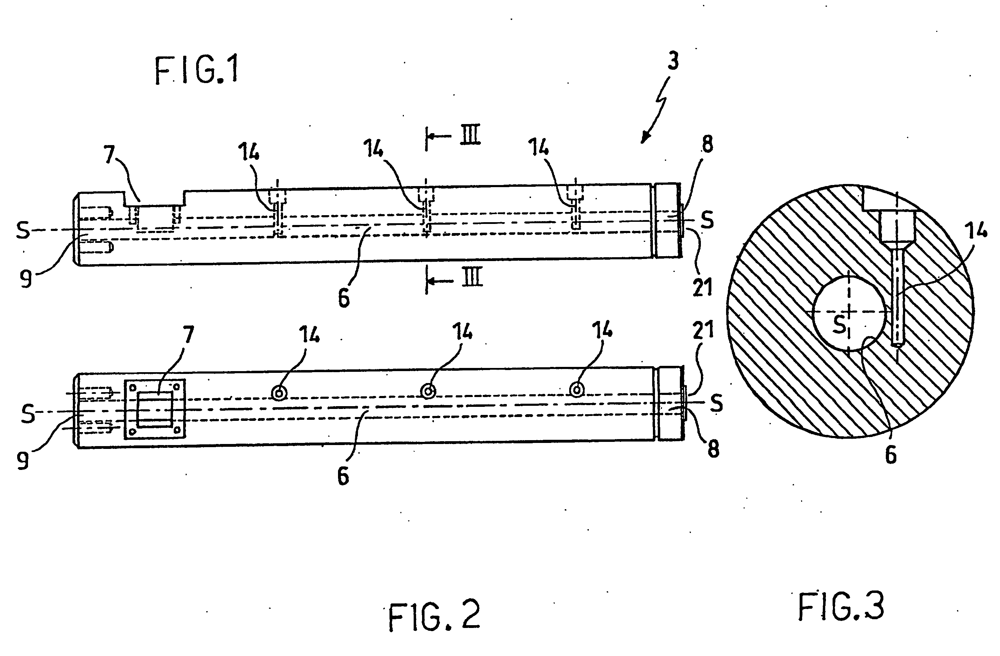

With reference to Figures 1, 2, 3 and 5, an extrusion machine, indicated as a whole by the number 1, comprises a base 2, an extrusion chamber 3, drive means 4 and a transmission mechanism 5.

The extrusion chamber 3 is of elongate and essentially prismatic shape, with a cylindrical bore 6 extending through the whole length of the said extrusion chamber 3. The cylindrical bore 6 is developed about an axis of symmetry s, which also forms the longitudinal axis of the extrusion chamber 3. At one end, the extrusion chamber 3 has a transverse feed aperture 7, which is in communication with the said cylindrical bore 6. The cylindrical bore 6 opens to the outside at both ends of the extrusion chamber 3, forming a discharge aperture 8 and a drive aperture 9.

Within the cylindrical bore 6 there are provided conveying and processing means for the material to be extruded. In one embodiment, the said conveying and processing means comprise a screw 10 with a variable core diameter and a variable pitch and inclination of the thread.

The extrusion chamber 3 is divided longitudinally into a plurality of temperature zones, for example the temperature zones 11a, 11b and 11c. Heating and/or cooling devices 12, for example electrical resistors and coolant tubing, are positioned on the outer surface of the said extrusion chamber 3. The said heating and/or cooling devices are referred to below as temperature regulators 12. The extrusion chamber 3, together with the said temperature regulators 12, is wrapped in a layer of thermal insulation material 13.

Advantageously, the shell of the extrusion chamber 3 has holes 14 which extend in a tangential direction with respect to the aforesaid cylindrical bore 6. These holes 14, referred to below as measurement cavities 14, house corresponding temperature sensors 15, which are also orientated in a tangential direction with respect to the cylindrical bore 6.

The radial distance of the said measurement cavities 14 from the cylindrical bore 6 is less than half the wall thickness of the said extrusion chamber 3, and the radial distance of the said measurement cavities 14 from the cylindrical bore 6 is preferably less than a third of the wall thickness of the said extrusion chamber 3.

In one embodiment, the said radial distance between the measurement cavities 14 and the cylindrical bore 6 is equal to half the diameter of the corresponding heat sensor 15.

The heat sensors 15 are in communication with a control unit 24 by data transmission means 23, and the control unit 24, in turn, is connected to the aforesaid temperature regulators 12 by data transmission means 23.

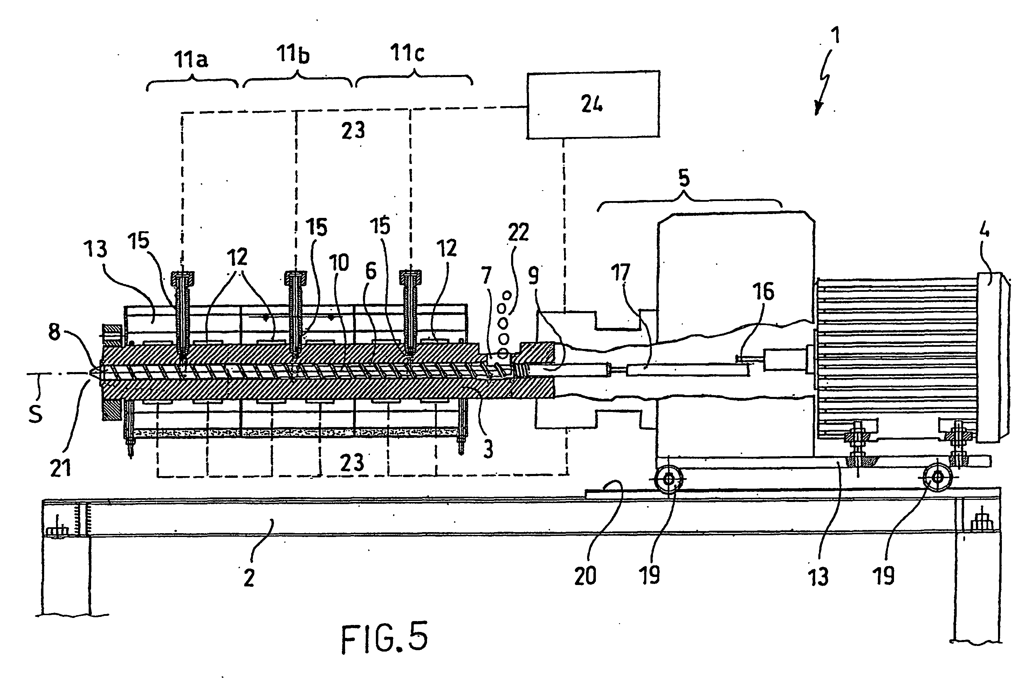

In one embodiment, the driving motor 4 in Figure 5 is an electric motor whose rotor is connected to the aforesaid transmission mechanism 5. The transmission mechanism 5 comprises reduction means 16 and a transmission shaft 17. The said transmission shaft 17 is orientated in the longitudinal direction of the extrusion chamber 3 and connected to the screw 10 through the drive aperture 9. The assembly consisting of the driving motor 4, the transmission mechanism 5 and the extrusion chamber 3 is fixed on a carriage chassis 18. The said carriage chassis 18 rests with rollers 19 on guide rails 20, provided on the base 2 of the extrusion machine 1. An extrusion die 21 is placed at the discharge aperture 8 of the extrusion chamber 3.

The operation of the extruder for temperature-controlled extrusion is described below with reference to Figure 5.

The rotational movement of the rotor of the driving motor 4 is converted by the reduction means 16 to a rotational movement of the transmission shaft 17 with the necessary angular velocity and torque for the extrusion process. The transmission shaft 17, being coupled to the shank of the screw 10, transmits the said rotational movement to the screw. Raw material 22, introduced into the cylindrical bore 6 through the feed aperture 7, is conveyed towards the discharge aperture 8 of the extrusion chamber 3. The variation of the core diameter of the screw 10 causes a variation of the space available for the raw material 22 in the corresponding area within the cylindrical bore 6. On the other hand, the inclination and the pitch length of the thread of the screw 10 determine the flow rate of the material and the intensity of mixing.

The temperature regulators 12, located on the outer surface of the extrusion chamber 3, can be used to heat and cool the shell of the extrusion chamber 3, which in turn transmits the heat to the raw material 22 within the cylindrical bore 6. The thermal insulation layer 13 reduces the losses of thermal energy due to natural convection and thermal radiation from the outer surface of the extrusion chamber 3 and from the temperature regulators 12 themselves. The said layer of thermal insulation material 13 makes the extrusion process less sensitive to external thermal and climatic conditions.

Whereas the conveying, mixing and pressure treatment of the raw material 22 are essentially determined by the geometry and rotational velocity of the screw 10, the temperature of the material within the cylindrical bore 6 depends on many factors, which are difficult to control. Any heat treatment to be applied during the extrusion process therefore requires a system of temperature measurement and regulation. The measurement cavities 14, formed in the shell of the extrusion chamber 3, house the heat sensors 15. The said heat sensors 15, being orientated tangentially with respect to the cylindrical bore 6, are orientated essentially perpendicularly with respect to the direction of the maximum temperature gradient. The heat sensors 15 are therefore positioned along an isothermal line, determined solely by the radial distance between the corresponding measurement cavity 14 and the longitudinal axis s. Any errors of positioning of the thermal probe 15 within the measurement cavity 14 are not manifested as corresponding errors of measurement. The tangential positioning of the measurement cavities 14 with respect to the cylindrical bore 6 also enables the thermal probe to be inserted very deeply into the shell of the extrusion chamber 3, thus removing it from any external effects. The heat sensors 15 measure the temperature and the change of temperature as a function of the position in the extrusion chamber 3 and as a function of time, and transmit the corresponding data via transmission means 23 to a control unit 24 which processes the received data and, in turn, operates the temperature regulators 12, thus providing temperature control with feedback from the said sensors 15.

During a process of mixing, melting, heat treatment, pressure treatment, etc., the raw material 22 is conveyed to the discharge aperture 8 where an extrusion die forms the extruded or melted material into sheets, tubes, bars or any other shape suitable for profile forming.

The extruder 1 for temperature-controlled extrusion according to the invention has numerous advantages.

Because of the tangential positioning of the measurement cavities 14 with respect to the cylindrical bore 6, any error of positioning of the heat sensors 15 only causes a negligible error in the radial distance between the sensitive point of the thermal probe 15 and the cylindrical bore 6. This provides unusually reliable and precise measurement of the temperature.

The positioning of the measurement cavities 14 according to the invention also enables the thermal probe 15 to be inserted very deeply into the shell of the extrusion chamber 3, thus providing exceptional protection from any external effects on the measurement of the temperature. This also has a favourable effect in situations in which the thermal insulation 13 is temporarily removed for the maintenance of the temperature regulators, for example in the case of any replacement during the operation of the extruder 1.

The position of the measurement cavities 14 according to the invention also enables the heat sensors to be brought closer to raw material 22 than in the prior art, without weakening the extrusion chamber 3. The quality of temperature measurement and regulation is therefore independent of the diameter of the extrusion chamber 2.

The aforesaid characteristics considerably increase the reliability and repeatability of measurement, and therefore of the extrusion process, in case of comparison or replacement with other heat sensors 15 of the same type. The response times of the heat sensors 15 and also of the temperature regulators 12 become shorter, thus providing a considerable improvement in the temperature regulation performance of the extrusion machine 1.

Clearly, changes and/or additions can be made to what has been described and illustrated above

For example, it is possible to form one or more measurement cavities 14 in a direction which is essentially parallel to the cylindrical bore 6, one or more heat sensors 15 being inserted in the said measurement cavities.

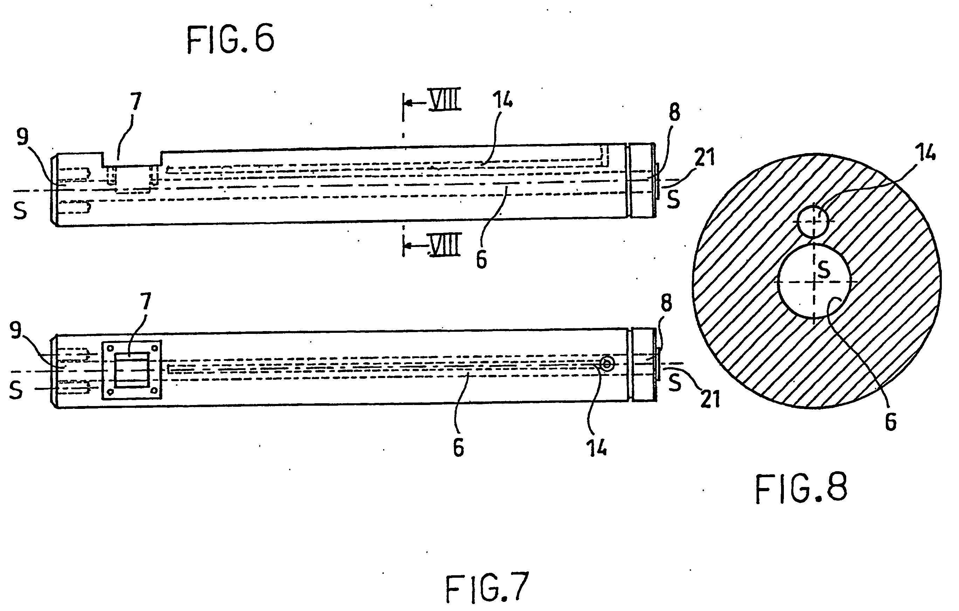

One embodiment of the invention has a single measurement cavity 14 which extends in a parallel way along the whole cylindrical bore 6 and can comprise a succession of heat sensors 15 or continuous temperature measurement means, as shown for example in Figure 6.

The present invention of an extruder for temperature-controlled extrusion is not limited to the extrusion of plastic material, but can be applied to any linear temperature-controlled process, which may be repetitive, in which direct access of the sensor means to the process space is prevented, for example in the extrusion, processing and packaging of food products, the extrusion of synthetic, composite, metallic and other materials.

In a further embodiment, the functions of the driving motor 4, the transmission mechanism 5, and the screw 10 are carried out by a pump which conveys and compresses the raw material 22 during the extrusion process.

## Claims

1. Extruder (1) for temperature-controlled extrusion, comprising an extrusion chamber (3) which forms a cylindrical bore (6) with a feed aperture (7) and a discharge aperture (8), the said cylindrical bore (6) being developed about an axis of symmetry (s) and interacting with means (4, 5, 10) for conveying and processing the material to be extruded (22), in which the said extrusion chamber (3) has at least one measurement cavity (14) for housing at least one heat sensor (15), wherein said measurement cavity (14) is separate from the cylindrical bore (6) which remains thereby cylindrical,
**characterized in that** the said measurement cavity (14) extends in a direction contained in a plane tangential to a cylinder having the said axis of symmetry (s) and having a diameter greater than the diameter of the said cylindrical bore (6).

2. Extruder (1) according to Claim 1, in which the radial distance between the said cylindrical bore (6) and the said measurement cavity (14) is less than half of the wall thickness of the said extrusion chamber (3).

3. Extruder (1) according to Claim 1, in which the radial distance between the said cylindrical bore (6) and the said measurement cavity (14) is less than one third of the wall thickness of the said extrusion chamber (3).

4. Extruder (1) according to Claim 1, in which the radial distance between the said cylindrical bore (6) and the said measurement cavity (14) is half the diameter of the heat sensor (15).

5. Extruder (1) according to any one of the preceding claims, in which at least one measurement cavity (14) extends perpendicularly to the axis of symmetry (s).

6. Extruder (1) according to any one of Claims 1 to 4, in which at least one measurement cavity (14) extends parallel to the axis of symmetry (s).

7. Extruder (1) according to Claim 6, in which the said measurement cavity (14) extends along the whole length of the cylindrical bore (6).

8. Extruder (1) according to either of Claims 6 or 7, in which the said measurement cavity (14) houses a succession of heat sensors (15).

9. Extruder (1) according to one of Claims 6 or 7, in which the said measurement cavity (14) houses continuous sensor means.

10. Extruder (1) according to any one of the preceding claims, in which the said measurement cavity (14) houses a temperature sensor (15) which is oriented in a tangential direction with respect to the cylindrical bore (6).

## Patentansprüche

1. Extrudiervorrichtung (1) für temperaturkontrollierte Extrusion, umfassend eine Extrusionskammer (3), welche eine zylindrische Bohrung (6) mit einer Zufuhröffnung (7) und einer Ablassöffnung (8) bildet, wobei die zylindrische Bohrung (6) um eine Symmetrieachse (s) ausgebildet ist und mit einer Einrichtung (4, 5, 10) zum Befördern und Verarbeiten des zu extrudierenden Materials (22) zusammenwirkt, in welcher die Extrusionskammer (3) zumindest einen Messhohlraum (14) zum Aufnehmen zumindest eines Wärmesensors umfasst, wobei der Messhohlraum (14) von der zylindrischen Bohrung (6), die hierdurch zylindrisch bleibt, getrennt ist, **dadurch gekennzeichnet, dass** sich der Messhohlraum (14) in einer Richtung erstreckt, die in einer Ebene tangential zu einem Zylinder enthalten ist, welcher die Symmetrieachse (s) aufweist und einen Durchmesser hat, der größer ist als der Durchmesser der zylindrischen Bohrung (6).

2. Extrudiervorrichtung (1) nach Anspruch 1, in welcher der radiale Abstand zwischen der zylindrischen Bohrung (6) und dem Messhohlraum (14) geringer als die Hälfte der Wanddicke der Extrusionskammer (3) ist.

3. Extrudiervorrichtung (1) nach Anspruch 1, in welcher der radiale Abstand zwischen der zylindrischen Bohrung (6) und dem Messhohlraum (14) geringer als ein Drittel der Wanddicke der Extrusionskammer (3) ist.

4. Extrudiervorrichtung (1) nach Anspruch 1, in welcher der radiale Abstand zwischen der zylindrischen Bohrung (6) und dem Messhohlraum (14) die Hälfte des Durchmessers des Wärmesensors (15) beträgt.

5. Extrudiervorrichtung (1) nach einem der vorhergehenden Ansprüche, in welcher sich zumindest ein Messhohlraum (14) senkrecht zur Symmetrieachse (s) erstreckt.

6. Extrudiervorrichtung (1) nach einem der Ansprüche 1 bis 4, in welcher sich zumindest ein Messhohlraum (14) parallel zu der Symmetrieachse (s) erstreckt.

7. Extrudiervorrichtung (1) nach Anspruch 6, in welcher sich der Messhohlraum (14) entlang der gesamten Länge der zylindrischen Bohrung (6) erstreckt.

8. Extrudiervorrichtung (1) nach den Ansprüchen 6 und 7, in welcher der Messhohlraum (14) eine Reihe von Wärmesensoren (15) aufnimmt.

9. Extrudiervorrichtung (1) nach einem der Ansprüche 6 oder 7, in welcher der Messhohlraum (14) durchgehende Sensoreinrichtungen aufnimmt.

10. Extrudiervorrichtung (1) nach einem der vorhergehenden Ansprüche, in welcher der Messhohlraum (14) einen Temperatursensor (15) aufnimmt, der in Bezug auf die zylindrische Bohrung (6) in einer tangentialen Richtung ausgerichtet ist.

## Revendications

1. Extrudeuse (1) pour l'extrusion à température régulée, comprenant une chambre d'extrusion (3) qui forme un alésage cylindrique (6) avec une ouverture d'alimentation (7) et une ouverture de décharge (8), ledit alésage cylindrique (6) étant développé autour d'un axe de symétrie (s) et agissant en interaction avec des moyens (4, 5, 10) pour convoyer et traiter le matériau à extruder (22), dans laquelle ladite chambre d'extrusion (3) comporte au moins une cavité de mesure (14) destinée à loger au moins un détecteur de chaleur (15), dans laquelle ladite cavité de mesure (14) est séparée de l'alésage cylindrique (6), qui de cette manière reste cylindrique,
**caractérisée en ce que** ladite cavité de mesure (14) s'étend dans une direction contenue dans un plan tangentiel à un cylindre ayant ledit axe de symétrie (s) et ayant un diamètre supérieur au diamètre dudit alésage cylindrique (6).

2. Extrudeuse (1) selon la revendication 1, dans laquelle la distance radiale entre ledit alésage cylindrique (6) et ladite cavité de mesure (14) est inférieure à la moitié de l'épaisseur de la paroi de ladite chambre d'extrusion (3).

3. Extrudeuse (1) selon la revendication 1, dans laquelle la distance radiale entre ledit alésage cylindrique (6) et ladite cavité de mesure (14) est inférieure à un tiers de l'épaisseur de la paroi de ladite chambre d'extrusion (3).

4. Extrudeuse (1) selon la revendication 1, dans laquelle la distance radiale entre ledit alésage cylindrique (6) et ladite cavité de mesure (14) est égale à la moitié du diamètre du détecteur de chaleur (15).

5. Extrudeuse (1) selon l'une quelconque des revendications précédentes, dans laquelle au moins une cavité de mesure (14) s'étend perpendiculairement à l'axe de symétrie (s).

6. Extrudeuse (1) selon l'une quelconque des revendications 1 à 4, dans laquelle au moins une cavité de mesure (14) s'étend parallèlement à l'axe de symétrie (s).

7. Extrudeuse (1) selon la revendication 6, dans laquelle ladite cavité de mesure (14) s'étend sur toute la longueur de l'alésage cylindrique (6).

8. Extrudeuse (1) selon l'une ou l'autre des revendications 6 ou 7, dans laquelle ladite cavité de mesure (14) loge une succession de détecteurs de chaleur (15).

9. Extrudeuse (1) selon l'une des revendications 6 ou 7, dans laquelle ladite cavité de mesure (14) loge des moyens de détection continus.

10. Extrudeuse (1) selon l'une quelconque des revendications précédentes, dans laquelle ladite cavité de mesure (14) loge un détecteur de température (15) qui est orienté dans une direction tangentielle par rapport à l'alésage cylindrique (6).
